# EUROPEAN PATENT APPLICATION

(11) **EP 2 317 100 A1**
(43) Date of publication of application: **04.05.2011**
(21) Application number: 09174462.3
(22) Date of filing: 29.10.2009
(51) Int. Cl.: F02D 41/04, F02D 13/00, F02D 41/00

(54) **Method and system to control an engine shut-down for a vehicle**

(71) Applicant: Ford Global Technologies, LLC, Dearborn, MI 48126 (US)
(72) Inventor: Forssell, Jonas, 42363 Torslanda (SE); Litorell, Martin, 41459 Göteborg (SE); Englander, Hans, 43733 Lindome (SE)
(74) Representative: Widahl, Jenny Marie

(57) **Abstract**

The present invention relates a method and system to control an engine shut-down for a vehicle having an internal combustion engine and a start-stop system at least partially controlled by an engine management system which may issue an engine shut down request (1) and also senses combustion quality. Upon receipt of an engine shut-down request (1), inlet passages to an intake manifold of the engine are partially closed. A predetermined time period (T_{EGRC,} T_{TC}) after the partial closing thereof, inlet passages to the intake manifold are completely closed during maintained fuel-injection (4). The fuel injection amount (4) is increased in order to maintain an idle speed of the engine. In response to the engine management system sensing that the combustion quality (6) drops, the fuel-injection (4) is shut-off completely. As the number of revolutions per minute (7) drops below a predetermined threshold (T_{THR}), a predetermined time thereafter an inlet passage (3') to the intake manifold is opened during an intake phase.

## Description

### Technical field

The present invention relates to a method to control an engine shut-down for a vehicle having an internal combustion engine and a start-stop system at least partially controlled by an engine management system which may issue an engine shut down request and which engine management system also senses the combustion quality in accordance with the preamble of claim 1.

The present invention also relates to a system to control an engine shut-down for a vehicle having an internal combustion engine and a start-stop system at least partially controlled by an engine management system which may issue an engine shut down request and which engine management system also senses the combustion quality in accordance with the preamble of claim 8.

### Background of the invention

The need to reduce fuel consumption and emissions in automobiles and other vehicles predominately powered by internal combustion engines is well known.

Idling contributes to a considerable portion of the fuel consumption and emissions in vehicles having internal combustion engines, especially in urban traffic. Start-stop systems that are able to stop the engine in vehicle stand-still situations are therefore increasingly marketed by car manufacturers.

Due to the frequent stops in start-stop systems it is important to make the stops as smooth and pleasant an experience for the driver and any passengers as possible in order to avoid customer complaints.

Further, in the case of the start-stop system utilizing constantly engaged starters with freewheeling, the starter or its transmission may deteriorate if it is exposed to negative engine speed, so called rock-back, during engine shut-down.

State-of-the-art solutions have usually been based on fuel shut-off, which leads to vibrations during engine shut-down.

### Summary of the invention

One object of the invention is to provide an improved method to control an engine shut-down for a vehicle having an internal combustion engine and a start-stop system at least partially controlled by an engine management system, which may issue an engine shut down request and which engine management system also senses the combustion quality, for avoiding or at least mitigating vibrations and negative engine speed during engine shut-down.

This object is achieved by the method as claimed in claim 1.

Thanks to the provision of the steps of: upon receipt of an engine shut-down request, partially closing inlet passages to an intake manifold of the engine; a predetermined time period after the partial closing thereof completely closing inlet passages to the intake manifold whilst performing a fuel-injection operation; increasing the fuel injection amount in order to maintain an idle speed of the engine; in response to the engine management system sensing that the combustion quality drops, shutting-off the fuel-injection completely; as the number of revolutions per minute drops below a predetermined threshold, a predetermined time thereafter opening an inlet passage to the intake manifold during an intake phase of the engine, a method to control an engine shut-down for a vehicle having an internal combustion engine for avoiding or at least mitigating vibrations and negative engine speed during engine shut-down is provided.

A further object of the invention is to provide an improved system to control an engine shut-down for a vehicle having an internal combustion engine and a start-stop system, at least partially controlled by an engine management system which may issue an engine shut down request and which engine management system also senses the combustion quality, for avoiding or at least mitigating vibrations and negative engine speed during engine shut-down.

This object is achieved by the system as claimed in claim 8.

Thanks to the provision of: means for upon receipt of an engine shut-down request, partially closing inlet passages to an intake manifold of the engine; means for a predetermined time period after the partial closing thereof completely closing inlet passages to the intake manifold whilst performing a fuel-injection operation; means for increasing the fuel injection amount in order to maintain an idle speed of the engine; means for in response to the engine management system sensing that the combustion quality drops, shutting-off the fuel-injection completely; and means for, as the number of revolutions per minute drops below a predetermined threshold, a predetermined time thereafter opening an inlet passage to the intake manifold during an intake phase of the engine, an improved system to control an engine shut-down for a vehicle having an internal combustion engine for avoiding or at least mitigating vibrations and negative engine speed during engine shut-down is provided.

Preferred embodiments are listed in the dependent claims.

### Description of drawings

In the following, the invention will be described in greater detail by way of example only with reference to attached drawings, in which

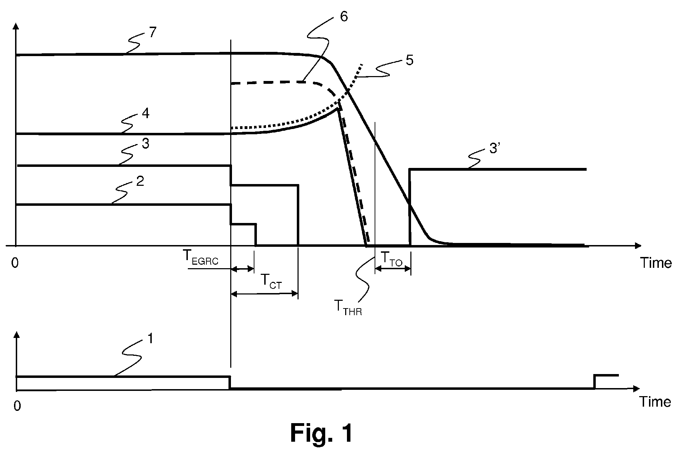

Fig. 1 is a schematic illustration of the method to control an engine shut-down for a vehicle in accordance with the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

The present invention relates to a method to decrease engine oscillations when stopping by decreasing torque peaks acting in the opposite direction of the engine's normal direction of rotation.

Thus, in accordance with the present invention is suggested a method to control an engine shut-down for a vehicle having an internal combustion engine and a start-stop system at least partially controlled by an engine management system which may issue an engine shut down request and which engine management system also senses the combustion quality.

The lowermost curve 1 of figure 1 illustrates an engine on request signal. If the engine on signal 1 drops to zero this is interpreted as an engine shut-down request. Upon receipt of such an engine shut-down request, a step of partially closing inlet passages to an intake manifold of the engine, such as a throttle and an exhaust gas recirculation (EGR) valve, is performed. The curve 2 illustrates the EGR valve position in percentage of fully open, the EGR valve being fully open (100%) at the time T=0. The curve 3 illustrates the throttle position in percentage of fully open, the throttle being fully open (100%) at the time T=0. Thus the step of partially closing inlet passages to an intake manifold of the engine comprises partially closing at least one of a throttle and EGR valve of the engine, preferably both, as an engine shut-down request is received, as illustrated by the drop in curves 2 and 3 at the time of the engine on signal 1 dropping to zero.

EGR valves are widely used in tailpipe emission control systems to recirculate a portion of the hot exhaust gases back into the intake manifold, thereby diluting the inducted air/fuel mixture and lowering combustion temperatures to reduce the amount of NOx (oxides of nitrogen) that are created.

The partial closing of the throttle and the EGR valve renders a lowering of the pressure in the intake manifold of the internal combustion engine. The pressure in the intake manifold is only lowered a few percent (some kPa).

A predetermined time period (T_{EGRC}, T_{TC}) after the partial closing of the inlet passages to the intake manifold of the engine, the step of completely closing the inlet passages to the intake manifold, such as the throttle and the EGR valve, is performed whilst a fuel-injection operation 4 is being performed. Thus, the step of completely closing inlet passages to the intake manifold comprises completely closing at least one of a throttle and EGR valve of the engine, preferably both. In figure 1 is illustrated how the throttle is completely closed a first predetermined time period T_{TC} after its partial closure, i.e. a predetermined time period T_{Tc} after the engine on signal 1 dropped to zero. Figure 1 further illustrates how the EGR valve is completely closed a second predetermined time period T_{EGRC} after its partial closure, i.e. a predetermined time period T_{EGRC} after the engine on signal 1 dropped to zero.

Thus, when the engine on request signal 1 drops to zero a preset is made, e.g. the throttle and the EGR valve restrict their incoming flows in order to achieve a faster evacuation of the intake manifold in the above step when the inlet passages to the intake manifold of the engine, e.g. the throttle and the EGR valve, are completely closed. In the step of partially closing it is thus desired to achieve a partially closed position of the throttle and the EGR valve as they are to be fully closed later.

During this time a step of increasing the fuel injection amount in order to maintain an idle speed of the engine is being performed. Curve 4 of figure 1 illustrates an actual fuel injection quantity and curve 5 an idle speed control injection quantity. The inlet passages to the intake manifold of the engine, such as the throttle and the EGR valve, close before the fuel injection operation is terminated, in order to later achieve a faster decrease of the pressure in the intake manifold and thereby also the cylinder pressure such that the internal torque peaks of the engine becomes lower. Thereafter, the injection amount of petrol is increased somewhat in order to maintain idle speed of the engine, as illustrated by the rise of curve 4 once the engine on signal 1 has dropped to zero. This is handled by the idling regulator of the engine. It is desirable to delay the drop of engine rev, which allows for more time to evacuate air from the inlet manifold, whereby less air is passed on to the cylinders of the engine. More rapid decrease of cylinder pressure means less air in the cylinders, reducing internal torque peaks during compression.

In response to the engine management system sensing that the combustion quality drops, due to the dropping inlet pressure, emissions, idle speed etc, a step of shutting-off the fuel-injection completely is performed, whereupon the idle speed of the engine drops to zero. In figure 1, combustion quality is illustrated by the curve 6. Thus, as the curve 6 illustrating combustion quality drops, the fuel-injection is completely shut-off, as illustrated by the steep drop in curve 4.

As the number of revolutions per minute of the engine, as illustrated by curve 7 of figure 1, drops below a predetermined threshold T_{THR}, the step of, a predetermined time T_{To} thereafter, opening an inlet passage to the intake manifold, during an intake phase of the engine, is performed. Thus, shortly after the number of revolutions per minute of the engine 7 drops below the predetermined threshold T_{THR}, at least one of the inlet passages to the intake manifold, preferably the throttle, is once again opened, as illustrated by curve 3' of figure 1, in order to allow fresh air to enter as it is desirable to achieve that any vacuum in cylinders which disturb during the inlet phase shall not pull the engine backwards. Thus, the step of opening an inlet passage to the intake manifold during an intake phase of the engine comprises partially or fully opening at least one of a throttle and EGR valve of the engine, the opening of the throttle contributing most to the desired result. If partially opening at least one of the throttle and EGR valve of the engine, the throttle and/or EGR valve should be opened to a degree of at least 10% of its respective fully open position. However, as illustrated by curve 3' of figure 1, the throttle may be fully opened.

Thus, the above method achieves the goals to decrease engine oscillations when stopping by decreasing torque peaks acting in the opposite direction of the engine's normal direction of rotation through the first measure of decreasing the cylinder pressure during compression by throttling means. A second measure is limited to the end of the last revolution before the engine stops. This second measure typically takes effect after the last top dead center (TDC), which corresponds to an engine speed threshold of typically within the range of 100-300 rpm, i.e. the predetermined threshold T_{THR} for opening an inlet passage to the intake manifold during an intake phase of the engine lies within the range 100 ― 300 rpm. In one embodiment the predetermined threshold T_{THR} for opening an inlet passage to the intake manifold during an intake phase of the engine is 200 rpm.

Through ensuring that the cylinder pressure does not exceed atmospheric pressure during the compression phase in each cylinder during retardation of the vehicle, all the way down to standstill, engine vibrations (oscillations) during shut-down are avoided and it is further partially avoided that the engine runs backwards during the stop instance.

The final measure for ensuring that the engine does not reverse during the stop instance is achieved through increasing cylinder pressure through opening the throttle some time after the last upper top dead center has been passed, whereby there exist no vacuum that may pull back the engine backwards during the final rotation thereof prior to stopping.

The present invention also relates to a system to control an engine shut-down for a vehicle as described above and comprising means for performing the above described steps. These means may include, but are not restricted to: a start-stop system; an engine management system; a system for variable valve timing (VVT); a variable cam profile; a fuelling system; a system for idle speed control fuelling; system sensors for sensing different operating parameters such as engine speed, engine coolant temperature, inlet pressure, emission related parameters, idle speed etc.

The present invention also relates to an automotive vehicle comprising a system to control an engine shut-down for a vehicle as described above.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method to control an engine shut-down for a vehicle having an internal combustion engine and a start-stop system at least partially controlled by an engine management system which may issue an engine shut down request and which engine management system also senses the combustion quality, **characterized in that** it comprises the steps of:
upon receipt of an engine shut-down request (1), partially closing inlet passages to an intake manifold of the engine;
a predetermined time period (T_{EGRC}, T_{TC}) after the partial closing thereof completely closing inlet passages to the intake manifold whilst performing a fuel-injection operation (4);
increasing the fuel injection amount (4) in order to maintain an idle speed of the engine;
in response to the engine management system sensing that the combustion quality (6) drops, shutting-off the fuel-injection (4) completely;
as the number of revolutions per minute (7) drops below a predetermined threshold (T_{THR}), a predetermined time (T_{TO}) thereafter opening an inlet passage (3') to the intake manifold during an intake phase of the engine.

2. A method according to claim 1,
**characterized in that**:
the step of partially closing inlet passages to an intake manifold of the engine comprises partially closing at least one of a throttle and EGR valve of the engine.

3. A method according to any one of claims 1 to 2,
**characterized in that**:
the step of completely closing inlet passages to the intake manifold comprises completely closing at least one of a throttle and EGR valve of the engine.

4. A method according to any one of claims 1 to 3,
**characterized in that**:
the predetermined threshold (T_{THR}) for opening an inlet passage to the intake manifold during an intake phase of the engine lies within the range 100 ― 300 rpm.

5. A method according to any one of claims 1 to 4,
**characterized in that**:
the predetermined threshold (T_{THR}) for opening an inlet passage to the intake manifold during an intake phase of the engine is 200 rpm.

6. A method according to any one of claims 1 to 5,
**characterized in that**:
the step of opening an inlet passage (3') to the intake manifold during an intake phase of the engine comprises partially opening at least one of a throttle and EGR valve of the engine.

7. A method according to any one of claims 1 to 6,
**characterized in that**:
the step of opening an inlet passage (3') to the intake manifold during an intake phase of the engine comprises completely opening at least one of a throttle and EGR valve of the engine.

8. A system to control an engine shut-down for a vehicle having an internal combustion engine and a start-stop system at least partially controlled by an engine management system which may issue an engine shut down request and which engine management system also senses the combustion quality, **characterized in that** it comprises:
means for upon receipt of an engine shut-down request (1), partially closing inlet passages to an intake manifold of the engine;
means for a predetermined time period (T_{EGRC}, T_{TC}) after the partial closing thereof completely closing inlet passages to the intake manifold whilst performing a fuel-injection operation (4);
means for increasing the fuel injection amount (4) in order to maintain an idle speed of the engine;
means for in response to the engine management system sensing that the combustion quality (6) drops, shutting-off the fuel-injection (4) completely; and
means for, as the number of revolutions per minute (7) drops below a predetermined threshold (T_{THR}), a predetermined time (T_{TO}) thereafter opening an inlet passage (3') to the intake manifold during an intake phase of the engine.

9. A system according to claims 8,
**characterized in that**:
the means for partially closing inlet passages to an intake manifold of the engine comprises means for partially closing at least one of a throttle and EGR valve of the engine.

10. A system according to any one of claims 8 to 9,
**characterized in that**:
the means for completely closing inlet passages to the intake manifold comprises means for completely closing at least one of a throttle and EGR valve of the engine.

11. A system according to any one of claims 8 to 10,
**characterized in that**:
the means for opening an inlet passage to the intake manifold during an intake phase of the engine as the number of revolutions per minute drops below a predetermined threshold (T_{THR}) are arranged to open an inlet passage to the intake manifold during an intake phase of the engine as the number of revolutions per minute drops below a predetermined threshold (T_{THR}) within the range 100 - 300 rpm.

12. A system according to any one of claims 8 to 11,
**characterized in that**:
the means for opening an inlet passage to the intake manifold during an intake phase of the engine as the number of revolutions per minute drops below a predetermined threshold (T_{THR}) are arranged to open an inlet passage to the intake manifold during an intake phase of the engine as the number of revolutions per minute drops below a predetermined threshold (T_{THR}) of 200 rpm.

13. A system according to any one of claims 8 to 12,
**characterized in that**:
the means for opening an inlet passage to the intake manifold during an intake phase of the engine comprises means for partially opening at least one of a throttle and EGR valve of the engine.

14. A system according to any one of claims 13 to 14,
**characterized in that**:
the means for opening an inlet passage to the intake manifold during an intake phase of the engine comprises means for completely opening at least one of a throttle and
EGR valve of the engine.

15. An automotive vehicle, **characterized in that** it comprises a system to control an engine shutdown for a vehicle according to any one of claims 8 to 14.
